# EUROPEAN PATENT APPLICATION

(11) **EP 2 009 054 A1**
(43) Date of publication of application: **31.12.2008**
(21) Application number: 07741640.2
(22) Date of filing: 13.04.2007
(51) Int. Cl.: C08L 27/18, C08K 5/14, C08L 23/14, C08L 29/10

(54) **FLUOROELASTOMER COMPOSITION AND MOLDED FLUORORUBBER ARTICLE**

(30) Priority: 19.04.2006 JP 2006115359
(71) Applicant: Asahi Glass Company, Limited, Chiyoda-ku Tokyo 100-8405 (JP)
(72) Inventor: FUNAKI, Hiroshi, Tokyo 100-8405 (JP); HONDA, Makoto, Tokyo 100-8405 (JP); SAITO, Masayuki, Tokyo 100-8405 (JP); KAMIYA, Hiroki, Tokyo 100-8405 (JP)
(74) Representative: Müller-Boré & Partner Patentanwälte
(86) International application number: PCT/JP2007/058204
(87) International publication number: WO 2007/119834

(57) **Abstract**

To provide a fluoroelastomer composition which can give a molded fluororubber article excellent in heat resistance and compression set characteristics and in basic properties including tensile strength and tensile elongation, and which has excellent crosslinkability and satisfactory moldability, and is less susceptible to scorch.

A fluoroelastomer composition comprising (a) a perfluoroelastomer having a glass transition temperature of at most 15°C and a hydrogen atom content of at most 0.1 mass% and (b) a fluoroelastomer which is a fluorocopolymer having repeating units derived from a hydrogen-containing monomer and has a glass transition temperature of at most 15°C and a hydrogen atom content of at least 0.3 mass%, and as a case requires, (c) an organic peroxide, wherein the mass ratio of the component (a) to the component (b) (component (a)/component (b)) is in a range of from 1/99 to 99/1.

## Description

### TECHNICAL FIELD

The present invention relates to a fluoroelastomer composition which can give a molded fluororubber article excellent in heat resistance.

### BACKGROUND ART

As a fluororubber, a vinylidene fluoride/hexafluoropropylene copolymer, a tetrafluoroethylene/propylene copolymer or a tetrafluoroethylene/perfluoro(alkyl vinyl ether) copolymer is known.

The tetrafluoroethylene/perfluoro(alkyl vinyl ether) copolymer is called a perfluoroelastomer and is excellent in chemical resistance and plasma resistance.

The tetrafluoroethylene/propylene copolymer and the vinylidene fluoride/hexafluoropropylene copolymer are excellent in chemical resistance. Particularly, the tetrafluoroethylene/propylene copolymer is excellent in alkali resistance or amine resistance.

It is well known that such fluoroelastomers are thermally crosslinked by an organic peroxide (e.g. Patent Document 1 and Patent Document 2).

Further in crosslinking by using an organic peroxide, it is known that rubber physical properties are improved by using a polyfunctional organic compound such as triallyl cyanurate, triallyl isocyanurate or trimethallyl isocyanurate as a co-crosslinking agent.

However, with respect to the molded fluororubber article obtained by using such a polyfunctional organic compound, since the polyfunctional organic compound is a hydrocarbon compound, it is not possible to sufficiently increase the heat resistance of the molded fluororubber article due to an influence by the heat resistance temperature of the polyfunctional organic compound (e.g. Patent Document 3).

As a molded fluororubber article having high heat resistance, a fluorocopolymer is known wherein a monomer containing a cyano group is copolymerized, and the cyano group in the fluorocopolymer is reacted to form a triazine ring (e.g. Patent Document 4).

However, the reaction rate of such a reaction to form a triazine ring is low, so that there was a problem such that a crosslinking reaction took time. A method is disclosed wherein a fluorodiolefin is used as a crosslinkable fluorocopolymer which does not contain a triazine ring and has a high crosslinking reaction rate (e.g. Patent Document 3). However, such a method requires a delicate adjustment during polymerization.

On the other hand, a fluorocopolymer composition has been known which comprises a fluorocopolymer not substantially containing a hydrogen atom, and a fluorocopolymer obtained by copolymerizing a monomer containing a hydrogen atom and a monomer not containing a hydrogen atom (e.g. Patent Document 5).

However, the fluorocopolymers used for such a fluorocopolymer composition have melting points, namely, they are resins, and no fluoroelastomer composition is known wherein a fluoroelastomer having a glass transition temperature of at most 15°C and no melting point, is used.
Patent Document 1: Japanese Patent No. 3508136
Patent Document 2: Japanese Patent No. 2888972
Patent Document 3: JP-A-8-12726
Patent Document 4: JP-A-49-61119
Patent Document 5: JP-A-2002-114884

### DISCLOSURE OF THE INVENTION

### OBJECT TO BE ACCOMPLISHED BY THE INVENTION

The object of the present invention is to provide a fluoroelastomer composition which has excellent crosslinkability and satisfactory moldability, and is less susceptible to scorch. Further, it is to provide a molded fluororubber article which is obtained by crosslinking such a fluoroelastomer composition, and which is excellent in heat resistance and compression set characteristics and in basic properties including tensile strength and tensile elongation.

### MEANS TO ACCOMPLISH THE OBJECT

The present invention provides the following:
(1) A fluoroelastomer composition comprising (a) a perfluoroelastomer having a glass transition temperature of at most 15°C and a hydrogen atom content of at most 0.1 mass% and (b) a fluoroelastomer which is a fluorocopolymer having repeating units derived from a hydrogen-containing monomer and has a glass transition temperature of at most 15°C and a hydrogen atom content of at least 0.3 mass%, and as a case requires, (c) an organic peroxide, wherein the content ratio of the component (a) to the component (b) is such that component (a)/component (b) = 1/99 to 99/1, by mass ratio.
(2) The fluoroelastomer composition according to the above (1), wherein the component (a) is a fluorocopolymer having repeating units derived from tetrafluoroethylene and repeating units derived from CF₂=CF-O-R^{f}, wherein R^{f} is a C₁₋₂₀ perfluoroalkyl group which may contain an etheric oxygen atom.
(3) The fluoroelastomer composition according to the above (1) or (2), wherein the component (b) is a fluorocopolymer having repeating units derived from tetrafluoroethylene and repeating units derived from propylene.
(4) The fluoroelastomer composition according to any one of the above (1) to (3), wherein the component (a) contains an iodine atom and/or a bromine atom.
(5) The fluoroelastomer composition according to any one of the above (1) to (4), wherein the above component (a)/component (b) = 95/5 to 5/95.
(6) The fluoroelastomer composition according to any one of the above (1) to (5), wherein the content of the above organic peroxide (c) is from 0.05 to 10 parts by mass based on 100 parts by mass of the total of the component (a) and the component (b).
(7) The fluoroelastomer composition according to any one of the above (1) to (6), which further contains a crosslinking agent in an amount of from 0.1 to 10 parts by mass based on 100 parts by mass of the total of the component (a) and the component (b).
(8) The fluoroelastomer composition according to any one of the above (1) to (7), wherein the above component (a) is a tetrafluoroethylene/perfluoro(methyl vinyl ether) copolymer.
(9) The fluoroelastomer composition according to any one of the above (1) to (8), wherein the above component (b) is a tetrafluoroethylene/propylene copolymer.
(10) A molded fluororubber article obtained by crosslinking the above fluoroelastomer composition.
(11) The molded fluororubber article according to the above (10), wherein with respect to the elongation and the tensile strength measured in accordance with JIS K 6251, after a heat resistance test at 250°C for 200 hours, the absolute value of the change in the tensile strength is at most 20%, and the absolute value of the change in the elongation is at most 10%.

### EFFECTS OF THE INVENTION

The fluoroelastomer composition of the present invention has excellent crosslinkability and satisfactory moldability, and is less susceptible to scorch. Further, the molded fluororubber article obtained by crosslinking such a fluoroelastomer composition is excellent in heat resistance and compression set characteristics and in basic properties including tensile strength and tensile elongation.

### BEST MODE FOR CARRYING OUT THE INVENTION

The component (a) to be used for the fluoroelastomer composition of the present invention is a perfluoroelastomer having a glass transition temperature of at most 15°C and a hydrogen atom content of at most 0.1 mass%.

As the perfluoroelastomer which is the component (a), it is preferred to use a fluorocopolymer having repeating units derived from tetrafluoroethylene (hereinafter referred to as TFE), and repeating units derived from CF₂=CF-O-R^{f} (wherein R^{f} is a C₁₋₂₀ perfluoroalkyl group which may contain an etheric oxygen atom). It is possible to use one type or at least two types of CF₂=CF-O-R^{f}. Preferred is CF₂=CF-O-CF₃, CF₂=CF-O-CF₂CF₃, CF₂=CF-O-CF₂CF₂CF₃, CF₂=CF-O-CF₂CF(CF₃)OCF₂CF₂CF₃ or CF₂=CF-O-CF₂CF₂-O-CF₂CF₃, more preferred is CF₂=CF-O-CF₃.

Further, the number of carbon atoms of R^{f} is preferably in a range of from 1 to 20, more preferably in a range of from 1 to 8.

The copolymerization ratio in the fluorocopolymer is preferably such that the repeating units derived from TFE/the repeating units derived from CF₂=CF-O-R^{f} = 30 to 80/70 to 20 (molar ratio). When the ratio is in such a range, the rubber physical properties will be excellent.

As the perfluoroelastomer, it is preferred to use one not substantially containing a hydrogen atom, but it is possible to use a perfluoroelastomer obtained by using one containing a small amount of hydrogen atoms in a chain transfer agent or a comonomer. The chain transfer agent containing a hydrogen atom may, for example, be a saturated hydrocarbon in a chain or cyclic form such as methane, ethane, propane, butane, pentane, hexane or cyclohexane, an alcohol such as methanol, ethanol or propanol, or a mercaptan such as tert-dodecyl mercaptan, n-dodecyl mercaptan or n-octadecyl mercaptan. Such chain transfer agents may be used alone or in combination as a mixture of two or more of them.

Further, the comonomer containing a hydrogen atom may, for example, be CF₂=CF-O-CH₂CF₃, CF₂=CF-O-CH₂CF₂CF₂CF₃, CF₂=CF-O-CH₂(CF₂CF₂)₂H, CF₂=CF-O-CF₂CF₂CH₂-I, CF₂=CF-O-CF₂CF₂CH₂-Br, CF₂=CF-O-CF₂CF₂(CF₃)-O-CF₂CF₂CH₂-I or CF₂=CF-O-CF₂CF₂(CF₃)-O-CF₂CF₂CH₂-Br. Such comonomers containing hydrogen atoms may be used alone or in combination as a mixture of two or more of them. However, if the hydrogen atom content is large, the performance of the perfluororubber such as heat resistance or chemical resistance will decrease.

Therefore, the hydrogen atom content in the perfluoroelastomer to be used in the present invention is at most 0.1 mass%, preferably at most 0.07 mass%, more preferably at most 0.05 mass%.

Further, the perfluoroelastomer to be used in the present invention is preferably a perfluoroelastomer containing iodine and/or bromine, more preferably a perfluoroelastomer containing iodine. For example, it is possible to use a perfluoroelastomer containing iodine and/or bromine obtained by polymerizing TFE with at least one perfluoromonomer selected from CF₂=CF-O-R^{f} together with a monomer containing iodine and/or bromine, or by copolymerizing the above monomers in the presence of a compound represented by I-R^{f2}-I (wherein, R^{f2} is a C₁₋₈ perfluoroalkylene group which may contain an etheric oxygen atom).

The above monomer containing iodine and/or bromine may, for example, be CF₂=CFBr, CH₂=CHCF₂CF₂Br, CF₂=CF-O-CF₂CF₂-I, CF₂=CF-O-CF₂CF₂-Br, CF₂=CF-O-CF₂CF₂CH₂-I, CF₂=CF-O-CF₂CF₂CH₂-Br, CF₂=CF-O-CF₂CF₂(CF₃)-O-CF₂CF₂CH₂-I or CF₂=CF-O-CF₂CF₂(CF₃) -O-CF₂CF₂-CH₂-Br.

Further, specific examples for the above I-R^{f2}-I may be diiododifluoromethane, 1,2-diiodoperfluoroethane, 1,3-diiodoperfluoropropane, 1,4-diiodoperfluorobutane, 1,5-diiodoperfluoropentane, 1,6-diiodoperfluorohexane, 1,7-diiodeperfluoroheptane and 1,8-diiodoperfluorooctane. Among them, preferred is 1,4-diiodoperfluorobutane or 1,6-diiodoperfluorohexane, particularly preferred is 1,4-diiodoperfluorobutane.

The content of iodine and/or bromine in the perfluoroelastomer to be used in the present invention is not particularly limited, but it is preferably from 0.1 to 1.5 mass%, more preferably from 0.1 to 1.0 mass%, particularly preferably from 0.2 to 1.0 mass%. When the content is in such a range, it is possible to obtain a composition which gives a crosslinked rubber excellent in rubber physical properties and compression set characteristics.

Further, the Mooney viscosity of the perfluoroelastomer to be used in the present invention is preferably from 1 to 100, more preferably from 5 to 90, further preferably from 5 to 80, particularly preferably from at least 5 to less than 70, as measured at 100°C in accordance with JIS K6300. The Mooney viscosity is an index for various average molecular weights. When it is large, it means that the molecular weight is high, and when it is small, it means that the molecular weight is low. If the Mooney viscosity is high, the compounding operation tends to be difficult. However, when the viscosity is in such a range, compounding will be easy, and rubber physical properties after crosslinking will be good.

The glass transition temperature (hereinafter referred to as Tg) of the perfluoroelastomer to be used in the present invention is at most 15°C, preferably from -50 to 10°C, more preferably from -50 to 0°C, most preferably from -50 to -30°C.

A process for producing the component (a) to be used for the present invention is not particularly limited, and it is preferred to use emulsion polymerization, solution polymerization, etc. Particularly preferred is emulsion polymerization. As an emulsifier to be used for the emulsion polymerization, it is possible to use a hydrocarbon-type emulsifier such as a known sodium lauryl sulfate or sodium dodecylbenzene sulfonate, or a fluorinated emulsifier such as ammonium perfluorooctanoate, ammonium perfluorohexanoate, C₂F₅-O-C₂F₄-O-CF₂-COONH₄, or C₃F₇-O-CF(CF₃)-CF₂-O-CF(CF₃)-COONH₄. The fluorinated emulsifier is particularly preferred from the viewpoint of stability during polymerization.

Perfluoroelastomers as the component (a) may be used alone or in combination as a mixture of two or more of them.

The component (b) to be used for the fluoroelastomer composition of the present invention is a fluoroelastomer which is a fluorocopolymer having repeating units derived from a hydrogen-containing monomer and has a glass transition temperature of at most 15°C and a hydrogen atom content of at least 0.3 mass%.

Such a fluoroelastomer may, for example, be at least one fluoroelastomer selected from a group consisting of a fluorocopolymer having, as essential components, repeating units derived from TFE and repeating units derived from propylene, and a fluorocopolymer having, as essential components, repeating units derived from vinylidene fluoride and repeating units derived from hexafluoropropylene.

The hydrogen-containing monomer in the component (b) may, for example, be an alkene such as ethylene, propylene or butene, a diene such as butadiene or hexadiene, a partially fluorinated alkene such as vinyl fluoride, vinylidene fluoride, ethylene trifluoride or propylene pentafluoride, a partially chlorinated alkene such as vinyl chloride or vinylidene chloride, a vinyl ester such as vinyl acetate, vinyl propionate, vinyl octanoate or vinyl ester represented by a formula CR¹R²=CR³COOCH=CH₂ (wherein each of R¹ and R² are independently a hydrogen atom, a C₁₋₁₀ alkyl group or a C₁₋₁₀ alkoxyalkyl group containing an etheric oxygen atom, and R³ is a hydrogen atom, a fluorine atom or a methyl group), a vinyl ether represented by CH₂=CH-O-R⁴ (wherein R⁴ is a C₁₋₈ alkyl group or an alkoxyalkyl group), or a partially fluorinated vinyl ether such as CF₂=CF-O-CH₂CF₃, CF₂=CF-O-CH₂CF₂CF₂CF₃ or CF₂=CF-O-CH₂(CF₂CF₂)₂H. Among them, an alkene and a partially fluorinated alkene are preferred, and ethylene, propylene and vinylidene fluoride are more preferred.

The fluorocopolymer having, as essential components, repeating units derived from TFE and repeating units derived from propylene may optionally have repeating units derived from at least one monomer selected from a group consisting of vinylidene fluoride, CF₂=CF-O-R^{f} (wherein R^{f} is a C₁₋₂₀ perfluoroalkyl group which may contain an etheric oxygen atom), ethylene, CH₂=CH-O-R⁴ (wherein R⁴ is a C₁₋₈ alkyl group or an alkoxyalkyl group); CH₂=CH-R^{f} (wherein R^{f} is a C₁₋₂₀ perfluoroalkyl group which may contain an etheric oxygen atom) or CR¹R²=CR³COOCH=CH₂ (wherein each of R¹ and R² is independently a hydrogen atom, a C₁₋₁₀ alkyl group or a C₁₋₁₀ alkoxyalkyl group containing an etheric oxygen atom, and R³ is an hydrogen atom, a fluorine atom or a methyl group).

The TFE/propylene type copolymer may, for example, be a TFE/propylene copolymer, a TFE/propylene/vinylidene fluoride copolymer, a TFE/propylene/CF₂=CF-O-CF₃ copolymer, a TFE/propylene/CF₂=CF-O-C₃F₇ copolymer, a TFE/propylene/CH₃-CH=CH-COO-CH=CH₂ copolymer, a TFE/propylene/CH₂=CH(CH₃)-COO-CH=CH₂ copolymer, a TFE/propylene/CH₂=CH-O-CH₃ copolymer or a TFE/propylene/CH₂=CH-CF₃ copolymer. Particularly preferred are a TFE/propylene copolymer, a TFE/propylene/vinylidene fluoride copolymer and a TFE/propylene/CH₃-CH=CH-COO-CH=CH₂ copolymer.

With respect to the above TFE/propylene type copolymer, when the copolymer composition is in the following range, the crosslinked rubber will be excellent in crosslinked rubber physical properties, and heat resistance, chemical resistance, low-temperature characteristics and rubber elasticity will be good:
in a TFE/propylene type copolymer, repeating units derived from TFE/repeating units derived from propylene = 40/60 to 60/40 (molar ratio);
in a TFE/propylene/vinylidene fluoride type copolymer, repeating units derived from TFE/repeating units derived from propylene/repeating units derived from vinylidene fluoride = 40 to 60/60 to 40/1 to 10 (molar ratio);
in a TFE/propylene/CF₂=CF-O-CF₃ copolymer, repeating units derived from TFE/repeating units derived from propylene/repeating units derived from CF₂=CF-O-CF₃ = 30 to 70/70 to 30/1 to 30 (molar ratio);
in a TFE/propylene/CF₂=CF-O-C₃F₇ copolymer, repeating units derived from TFE/repeating units derived from propylene/repeating units derived from CF₂=CF-O-C₃F₇ = 30 to 70/70 to 30/1 to 30 (molar ratio);
in a TFE/propylene/CH₃-CH=CH-COO-CH=CH₂ copolymer, repeating units derived from TFE/repeating units derived from propylene/repeating units derived from CH₃-CH=CH-COO-CH=CH₂ = 40 to 60/60 to 40/0.1 to 10 (molar ratio);
in a TFE/propylene/CH₂=CH(CH₃)-COO-CH=CH₂ copolymer, repeating units derived from TFE/repeating units derived from propylene/repeating units derived from CH₂=CH(CH₃)-COO-CH=CH₂ = 40 to 60/60 to 40/0.1 to 10 (molar ratio);
in a TFE/propylene/CH₂=CH-O-CH₃ copolymer, repeating units derived from TFE/repeating units derived from propylene/repeating units derived from CH₂=CH-O-CH₃ = 30 to 70/70 to 30/1 to 30 (molar ratio); and
in a TFE/propylene/CH₂=CH-CF₃ copolymer, repeating units derived from TFE/repeating units derived from propylene/repeating units derived from CH₂=CH-CF₃ = 30 to 70/70 to 30/0.01 to 10 (molar ratio).

The above vinylidene fluoride/hexafluoropropylene type copolymer may, for example, be a vinylidene fluoride/hexafluoropropylene copolymer or a TFE/vinylidene fluoride/hexafluoropropylene copolymer.

With respect to the above vinylidene fluoride/hexafluoropropylene type copolymer, when the copolymer composition is in the following range, the crosslinked rubber will be excellent in crosslinked rubber physical properties and heat resistance, chemical resistance, low-temperature characteristics and rubber elasticity will be good:
in a vinylidene fluoride/hexafluoropropylene type copolymer, repeating units derived from vinylidene fluoride/repeating units derived from hexafluoropropylene = 20/80 to 95/5 (molar ratio); and
in a TFE/vinylidene fluoride/hexafluoropropylene type copolymer, repeating units derived from TFE/repeating units derived from vinylidene fluoride/repeating units derived from hexafluoropropylene = 20 to 40/20 to 40/20 to 40 (molar ratio).

The Mooney viscosity of the fluoroelastomer which is the component (b) measured in accordance with JIS K6300 at 100°C, is preferably from 1 to 200, more preferably from 5 to 190, particularly preferably from 10 to 180.

Tg of the fluoroelastomer which is the component (b) is at most 15°C, but it is preferably from -30 to 10°C, more preferably from -30 to 5°C, most preferably from -30 to 0°C .

A process for producing the component (b) is not particularly limited, and it is possible to use emulsion polymerization, solution polymerization, etc. Particularly preferred is emulsion polymerization. As an emulsifier to be used for the emulsion polymerization, it is possible to use a hydrocarbon-type emulsifier such as a known sodium lauryl sulfate or sodium dodecylbenzene sulfonate, or a fluorinated emulsifier such as ammonium perfluorooctanoate, ammonium perfluorohexanoate, C₂F₅-O-C₂F₄-O-CF₂-COONH₄ or C₃F₇-O-CF(CF₃)-CF₂-O-CF(CF₃)-COONH₄.

Perfluoroelastomers as the component (b) may be used alone or in combination as a mixture of two or more of them.

The content ratio of the component (a) to the above component (b) is preferably in a range such that component (a)/component (b) = 99/1 to 1/99, more preferably in a range such that component (a) /component (b) = 95/5 to 5/95, particularly preferably in a range such that component (a)/component (b) = 90/10 to 10/90, by mass ratio. When the content ratio is in such a range, it is possible to obtain a molded fluororubber article excellent in rubber physical properties such as heat resistance, tensile strength and tensile elongation, and excellent in compression set characteristics.

A method of mixing the above components (a) and (b) is not particularly limited, and it may, for example, be a method wherein the solid components (a) and (b) isolated after polymerization are mixed in their solid states, or a method wherein at least one aqueous dispersion of the component (a) and at least one aqueous dispersion of the component (b) are mixed, and then the components (a) and (b) are coagulated in the mixed state and isolated.

The method of mixing the isolated solid components (a) and (b) is not particularly limited, and it is preferred to use a method of mixing by a two-roll mill or in a kneader.

The method of coagulating the aqueous dispersion of the component (a) and the aqueous dispersion of the component (b) is not particularly limited, and it is preferred to use a method of changing pHs of the aqueous dispersions, a method of mechanical coagulation or a method of salting out by adding a metallic salt.

To the fluoroelastomer composition of the present invention, an organic peroxide which is the component (c) may be incorporated as the case requires, and it is preferably incorporated. The organic peroxide which is the component (c) is not particularly limited, but it is preferably an organic peroxide having a temperature for half life of 1 minute of from 150 to 250°C, more preferably from 150 to 200°C, which is the temperature at which a half amount of the organic peroxide decomposes in 1 minute. Specific examples may be a dialkyl peroxide such as ditert-butyl peroxide, tert-butyl cumyl peroxide, dicumyl peroxide, α,α-bis(tert-butyl peroxy)-p-diisopropyl benzene, 2,5-dimethyl-2,5-di(tert-butyl peroxy)hexane, 2,5-dimethyl-2,5-di(tert-butyl peroxy)hexane-3 or 1,3-bis(tert-butyl peroxy isopropyl)benzene; 1,1-di(tert-butyl peroxy)-3,3,5-trimethylcyclohexane; 2,5-dimethylhexane-2,5-dihydroxy peroxide; benzoyl peroxide; tert-butylperoxybenzene; 2,5-dimethyl-2,5-di(benzoyl peroxy)hexane; tert-butyl peroxymaleate; and tert-butyl peroxy isopropyl carbonate. The organic peroxide which is the component (c) may be used alone or in combination as a mixture of two or more of them.

The content of the organic peroxide which is the component (c) is preferably from 0.05 to 10 parts by mass, more preferably from 0.3 to 5 parts by mass, most preferably from 0.5 to 3 parts by mass, based on 100 parts by mass of the total of the components (a) and (b) in the fluoroelastomer composition of the present invention. When the content is in such a range, it is possible to obtain a composition which can give a molded fluororubber article which is a crosslinked rubber excellent in heat resistance, rubber physical properties and compression set characteristics.

Further, to the fluoroelastomer composition of the present invention, it is possible to incorporate a scorch retarder which is the component (d), as the case requires. The scorch retarder may, for example, be a phenolic hydroxyl group-containing compound such as bisphenol A, bisphenol AF, phenol, cresol, p-phenylphenol, m-phenylphenol, o-phenylphenol, allyl phenol, p-hydroxybenzoate or ethyl p-hydroxybenzoate, a quinone such as hydroquinone, hydroquinone monoethyl ether or hydroquinone monomethyl ether, or an α-methylstyrene dimer such as 2,4-di(3-isopropylphenyl)-4-methyl-1-pentene, 2,4-di(4-isopropylphenyl)-4-methyl-1-pentene, 2-(3-isopropylphenyl)-4-(4-isopropylphenyl)-4-methyl-1-pentene, 2-(4-isopropylphenyl)-4-(3-isopropylphenyl)-4-methyl-1-pentene, 2,4-di(3-methylphenyl)-4-methyl-1-pentene, 2,4-di(4-methylphenyl)-4-methyl-1-pentene or 2,4-diphenyl-4-methyl-1-pentene.

Among them, a phenolic hydroxyl group-containing compound and an α-methylstyrene dimer are preferred, ophenylphenol and 2,4-diphenyl-4-methyl-1-pentene are more preferred, and o-phenylphenol is particularly preferred. Such scorch retarders as the component (d) may be used alone or in combination as a mixture of two or more of them.

The content of the scorch retarder as the component (d) is preferably from 0.05 to 3 parts by mass, more preferably from 0.05 to 1 part by mass, based on 100 parts by mass of perfluoroelastomer.

When the fluoroelastomer composition of the present invention is subjected to crosslinking, it is preferred to incorporate a crosslinking agent. When a crosslinking agent is incorporated, the crosslinking efficiency will be high. A specific example for the crosslinking agent may be triallyl cyanurate, triallylisocyanurate, trimethallyl isocyanurate, 1,3,5-triacryloyl hexahydro-1,3,5-triazine, triallyl trimellitate, m-phenylenediamine bismaleimide, p-quinone dioxime, p,p'-dibenzoylquinone dioxime, dipropargyl terephthalate, diallyl phthalate, N,N',N",N"'-tetraallyl terephthalamide, a siloxane oligomer containing a vinyl group such as polymethyl vinyl siloxane or polymethyl phenyl vinyl siloxane.

Specifically, triallyl cyanurate, triallyl isocyanurate and trimethallyl isocyanurate are preferred, and triallyl isocyanurate is more preferred. The content of the crosslinking agent is preferably from 0.1 to 10 parts by mass, more preferably from 0.5 to 5 parts by mass based on 100 parts by mass of the total of the components (a) and (b). When the content is in such a range, it is possible to obtain crosslinked physical properties which are well-balanced in strength and elongation.

Further, when the fluoroelastomer composition of the present invention is subjected to crosslinking, it is possible to incorporate a metallic oxide as the case requires. Specifically, when the perfluoroelastomer is a perfluoroelastomer containing bromine, by incorporating a metallic oxide, it is possible to let the crosslinking reaction proceed quickly and certainly. As a specific example for the metallic oxide, an oxide of divalent metal such as magnesium oxide, calcium oxide, zinc oxide or lead oxide, is preferred. The content of the metal oxide is preferably from 0.1 to 10 parts by mass, more preferably from 0.5 to 5 parts by mass based on 100 parts by mass of the total of the components (a) and (b). When the content is in such a range, it is possible to obtain crosslinking physical properties excellent in rubber physical properties and compression set characteristics.

To the fluoroelastomer composition of the present invention, it is possible to incorporate a pigment for coloration, a filler, a reinforcing agent, a vulcanizing accelerator, etc. The commonly used pigment, filler or reinforcing agent may, for example, be carbon black, titanium oxide, silicon dioxide, clay, talc, poly-TFE, polyvinylidene fluoride, polyvinyl fluoride, polychlorotrifluoroethylene, a TFE/ethylene copolymer a TFE/propylene copolymer or a TFE/vinylidene fluoride copolymer. The content of the pigment is preferably from 0.1 to 50 parts by mass based on 100 parts by mass of the total of the components (a) and (b). The content of the filler is preferably from 1 to 100 parts by mass based on 100 parts by mass of the total of the components (a) and (b). The content of the reinforcing agent is preferably from 1 to 100 parts by mass based on 100 parts by mass of the total of the components (a) and (b).

The vulcanizing accelerator may, for example, be sodium stearate or zinc stearate. The content of the vulcanizing accelerator is preferably from 0.01 to 10 parts by mass, more preferably from 0.1 to 5 parts by mass, based on 100 parts by mass of the total of the components (a) and (b).

The fluoroelastomer composition of the present invention can be obtained by mixing the above respective components.

As a mixing method, various mixing methods may be used, and mixing may be carried out by a two-roll mill, a kneader or a Banbury mixer. If heat is generated intensely during mixing, it is preferred to cool down a mixing machine such as a roll mill. The mixing temperature is preferably at most 60°C, more preferably at most 50°C. Further, the lower limit of the mixing temperature is not particularly limited, but it is usually at least 20°C.

The molded fluororubber article of the present invention can be obtained by crosslinking a fluoroelastomer composition comprising, as essential components, (a) perfluoroelastomer and (b) fluoroelastomer, and as a case requires, (c) organic peroxide.

Molding may be carried out simultaneously as crosslinking or carried out before crosslinking. The molding method is not particularly limited, and various molding methods may be available, such as press molding, compression molding, extrusion and injection molding.

The crosslinking reaction is preferably carried out at a temperature of from 150 to 300°C. When the crosslinking is carried out in such a range, it is possible to obtain a flurorubber article excellent in rubber physical properties and compression set characteristics.

The crosslinking reaction is usually carried out by combining a primary crosslinking reaction at a relatively low temperature and a secondary crosslinking reaction at a relatively high temperature. The primary crosslinking reaction temperature is usually preferably from 150 to 200°C. The secondary crosslinking reaction temperature is usually preferably from 200 to 300°C, more preferably from 220 to 290°C, particularly preferably from 230 to 280°C. The crosslinking time may optionally be selected. The specific example of combining a primary crosslinking reaction and a secondary crosslinking reaction may be such that the primary crosslinking is preferably carried out by hot pressing at a temperature of from 150 to 200°C for 3 to 60 minutes, and the secondary crosslinking is preferably carried out in an oven at a temperature of from 200 to 300°C for 1 to 24 hours.

The compression set characteristics of the fluororubber article of the present invention measured in accordance with JIS K6301 is preferably less than 25, more preferably less than 23.5.

Further with respect to the tensile strength and elongation measured in accordance with JIS K6251, the fluororubber article of the present invention preferably has heat resistance such that after the heat resistance test at 250°C for 200 hours, the absolute value of the change in tensile strength is at most 20%, and the absolute value of the change in elongation is at most 10%.

### EXAMPLE

Now, the present invention will be described in further detail with reference to Examples, but it should be understood that the present invention is by no means restricted by the following Examples.

The following methods are used to measure the Mooney viscosity and physical properties.

Mooney Viscosity: It is a viscosity measured in accordance with JIS K6300, by using a large rotor having a diameter of 38.1 mm and a thickness of 5.54 mm, at a temperature of 100°C, by setting a preheating time to be 1 minute, and a rotor rotating time to be 4 minutes. A large value indirectly means a high molecular weight.

Measurement of Physical Properties: A crosslinked fluororubber sheet having a thickness of 2 mm was punched out by a dumbbell No. 3 to obtain a sample, and the tensile strength and elongation at break were measured in accordance with JIS K6251.

Compression Set Characteristics (%): Measured in accordance with JIS K6301.

Heat Resistance: A crosslinked fluororubber sheet having a thickness of 2 mm was punched out by a dumbbell No. 3 to obtain a sample, which was left in an oven having a temperature set at 250°C for 200 hours, and the tensile strength and elongation at break of the dumbbell were measured in accordance with JIS K6251. With respect to the results, the smaller the change before and after the heat treatment, the better the heat resistance.

Evaluation of Scorch Property: The scorch property was evaluated by measuring t₉₀ (the time until reaching 90% of the maximum torque shown during a crosslinking test) when the crosslinking test was carried out at 177°C for 12 minutes at an angle of 3° by using Rubber Process Analyser RPA2000 manufactured by Alpha Technologies. When t₉₀ was less than 1 minute, such was taken as scorch occurred, and if it was at least 1 minute, such was taken as no scorch occurred. If t₉₀ is small, such means that the time from setting the rubber composition in a mold of a pressing machine to the start of crosslinking is short, and the operation efficiency in the processing is poor.

### EXAMPLE 1

50 Parts by mass of perfluoroelastomer (Mooney viscosity = 59.3, Tg = -5.0°C, iodine content = 0.36 mass%, and hydrogen atom content = at most 0.05 mass%), wherein repeating units derived from TFE/repeating units derived from PMVE = 65/35 (molar ratio) obtained by copolymerizing TFE with perfluoro(methyl vinyl ether) (hereinafter referred to as PMVE) by emulsion polymerization in the presence of 1,4-diiodoperfluorobutane, 50 parts by mass of fluoroelastomer (Mooney viscosity = 160, Tg = -3.0°C, and hydrogen atom content = 3.7 mass%) obtained by heat treating a fluorocopolymer wherein repeating units derived from TFE/repeating units derived from propylene = 55/45 (molar ratio) obtained by copolymerizing TFE with propylene by emulsion polymerization, 20 parts by mass of carbon black as a reinforcing agent, 3 parts by mass of triallyl isocyanurate (hereinafter referred to as TAIC) as a crosslinking agent, 1 part by mass of 1,3-bis(tert-butyl peroxy isopropyl)benzene (manufactured by KAYAKU AKZO CO., LTD., tradename "Perkadox 14") as an organic peroxide and 1 part by mass of sodium stearate as an additive, were mixed by a two-roll mill to obtain a fluoroelastomer composition in a total amount of 125 parts by mass. Such a fluoroelastomer composition was subjected to primary crosslinking by hot pressing at 170°C for 20 minutes, and it was further subjected to secondary crosslinking at 250°C for 4 hours to obtain a crosslinked fluororubber sheet having a thickness of 2 mm. The measurements of physical properties in ordinary state and compression set characteristics of such a fluororubber sheet and a heat resistance test were carried out. The results are shown in Table 1.

### EXAMPLE 2

20 Parts by mass of perfluoroelastomer of an iodine-containing TFE/PMVE copolymer, 80 parts by mass of fluoroelastomer of a TFE/propylene copolymer, 25 parts by mass of carbon black, 5 parts by mass of TAIC, 1 part by mass of Perkadox 14 and 1 part by mass of sodium stearate, the same ones as used in Example 1, were mixed by a two-roll mill to obtain a fluoroelastomer composition in a total amount of 132 parts by mass. Such a fluoroelastomer composition was subjected to primary crosslinking by hot pressing at 170°C for 20 minutes, and it was further subjected to secondary crosslinking at 250°C for 4 hours to obtain a crosslinked fluororubber sheet having a thickness of 2 mm. The measurements of physical properties in ordinary state and compression set characteristics of such a fluororubber sheet and a heat resistance test were carried out. The results are shown in Table 1.

### EXAMPLE 3

80 Parts by mass of perfluoroelastomer of an iodine-containing TFE/PMVE copolymer, 20 parts by mass of fluoroelastomer of a TFE/propylene copolymer, 25 parts by mass of carbon black, 5 parts by mass of TAIC, 1 part by mass of Perkadox 14 and 1 part by mass of sodium stearate, the same ones as used in Example 1, were mixed by a two-roll mill to obtain a fluoroelastomer composition in a total amount of 132 parts by mass. Such a fluoroelastomer composition was subjected to primary crosslinking by hot pressing at 170°C for 20 minutes, and it was further subjected to secondary crosslinking at 250°C for 4 hours to obtain a crosslinked fluororubber sheet having a thickness of 2 mm. The measurements of physical properties in ordinary state and compression set characteristics of such a fluororubber sheet and a heat resistance test were carried out. The results are shown in Table 1.

### COMPARATIVE EXAMPLE 1

100 parts by mass of perfluoroelastomer of an iodine containing TFE/PMVE copolymer, 20 parts by mass of carbon black and 3 parts by mass of TAIC, as the same ones as used in Example 1, and 1 part by mass of 2,5-dimethyl-2,5(tert-butyl peroxy)hexane (manufactured by NOF CORPORATION, tradename "PERHEXA 25B") as an organic peroxide and 0.2 part by mass of o-phenylphenol as a vulcanizing retarder were mixed by a two-roll mill to obtain a fluoroelastomer composition having a total mass of 124.2 parts by mass. Such a fluoroelastomer composition was subjected to primary crosslinking by hot pressing at 170°C for 20 minutes, and it was further subjected to secondary crosslinking at 250°C for 4 hours to obtain a crosslinked fluororubber sheet having a thickness of 2 mm. The measurements of physical properties in ordinary state and compression set characteristics of such a fluororubber sheet and a heat resistance test were carried out. The results are shown in Table 1.

### COMPARATIVE EXAMPLE 2

100 Parts by mass of TFE/propylene copolymer, 25 parts by mass of carbon black, 5 parts by mass of TAIC, 1 part by mass of Perkadox 14 and 1 part by mass of sodium stearate, as the same ones as used in Example 1, were mixed by a two-roll mill to obtain a fluoroelastomer composition in a total amount of 132 parts by mass. Such a fluoroelastomer composition was subjected to primary crosslinking by hot pressing at 170°C for 20 minutes, and it was further subjected to secondary crosslinking at 250°C for 4 hours to obtain a crosslinked fluororubber sheet having a thickness of 2 mm. The measurements of physical properties in ordinary state and compression set characteristics of such a fluororubber sheet and a heat resistance test were carried out. The results are shown in Table 1.

**TABLE 1**

| | Ex. 1 | Ex. 2 | Ex. 3 | Comp. Ex. 1 | Comp. Ex. 2 |
|---|---|---|---|---|---|
| Perfluoroelastomer of TFE/PMVE copolymer | 50 | 20 | 80 | 100 | 0 |
| Fluoroelastomer of TFE/propylene copolymer | 50 | 80 | 20 | 0 | 100 |
| Carbon black | 20 | 25 | 25 | 20 | 25 |
| TAIC | 3 | 5 | 5 | 3 | 5 |
| Perkadox 14 | 1 | 1 | 1 | 0 | 1 |
| PERHEXA 25B | 0 | 0 | 0 | 1 | 0 |
| Sodium stearate | 1 | 1 | 1 | 0 | 1 |
| o-Phenylphenol | 0 | 0 | 0 | 0.2 | 0 |
| Primary crosslinking condition | 170°C × 20 minutes | | | | |
| Secondary crosslinking condition | 250°C × 4 hours | | | | |
| Occurrence of scorch | None | None | None | None | None |
| Tensile strength (MPa) | 23.5 | 22.0 | 25.3 | 29.1 | 22.7 |
| Tensile elongation (%) | 254 | 255 | 248 | 254 | 321 |
| Compression set characteristics (%) | 20.4 | 23.2 | 18.6 | 16.7 | 25 |
| Change (%) in strength after heat resistance test | -10 | -17 | -9 | -58 | -23 |
| Change (%) in elongation after heat resistance test | -2 | +7 | +1 | +86 | +13 |

### INDUSTRIAL APPLICABILITY

The fluoroelastomer composition and the molded fluororubber article of the present invention may be used for O-rings, seats, gaskets, oil seals, diaphragms or V-rings. Further, they may be used for sealing materials for semiconductor devices, sealing materials having chemical resistance, coating or wire covering materials.

The entire disclosure of Japanese Patent Application No. 2006-115359 filed on April 19, 2006 including specification, claims and summary is incorporated herein by reference in its entirety.

## Claims

1. A fluoroelastomer composition comprising (a) a perfluoroelastomer having a glass transition temperature of at most 15°C and a hydrogen atom content of at most 0.1 mass% and (b) a fluoroelastomer which is a fluorocopolymer having repeating units derived from a hydrogen-containing monomer and has a glass transition temperature of at most 15°C and a hydrogen atom content of at least 0.3 mass%, and as a case requires, (c) an organic peroxide, wherein the content ratio of the component (a) to the component (b) is such that component (a)/component (b) = 1/99 to 99/1, by mass ratio.

2. The fluoroelastomer composition according to Claim 1, wherein the component (a) is a fluorocopolymer having repeating units derived from tetrafluoroethylene and repeating units derived from CF₂=CF-O-R^{f}, wherein R^{f} is a C₁₋₂₀ perfluoroalkyl group which may contain an etheric oxygen atom.

3. The fluoroelastomer composition according to Claim 1 or 2, wherein the component (b) is a fluorocopolymer having repeating units derived from tetrafluoroethylene and repeating units derived from propylene.

4. The fluoroelastomer composition according to any one of Claims 1 to 3, wherein the component (a) contains an iodine atom and/or a bromine atom.

5. The fluoroelastomer composition according to any one of Claims 1 to 4, wherein the above component (a)/component (b) = 95/5 to 5/95.

6. The fluoroelastomer composition according to any one of Claims 1 to 5, wherein the content of the above organic peroxide (c) is from 0.05 to 10 parts by mass based on 100 parts by mass of the total of the component (a) and the component (b).

7. The fluoroelastomer composition according to any one of Claims 1 to 6, which further contains a crosslinking agent in an amount of from 0.1 to 10 parts by mass based on 100 parts by mass of the total of the component (a) and the component (b).

8. The fluoroelastomer composition according to any one of Claims 1 to 7, wherein the above component (a) is a tetrafluoroethylene/perfluoro(methyl vinyl ether) copolymer.

9. The fluoroelastomer composition according to any one of Claims 1 to 8, wherein the above component (b) is a tetrafluoroethylene/propylene copolymer.

10. A molded fluororubber article obtained by crosslinking the fluoroelastomer composition as defined in any one of Claims 1 to 9.

11. The molded fluororubber article according to Claim 10, wherein with respect to the elongation and the tensile strength measured in accordance with JIS K 6251, after a heat resistance test at 250°C for 200 hours, the absolute value of the change in the tensile strength is at most 20%, and the absolute value of the change in the elongation is at most 10%.
